# EUROPEAN PATENT APPLICATION

(11) **EP 4 807 643 A1**
(43) Date of publication of application: **16.09.2026**
(21) Application number: 26163276.4
(22) Date of filing: 09.03.2026
(51) Int. Cl.: G06Q 10/083, G06Q 10/0837, G06V 20/20, G07F 9/00, G07F 17/12, H04W 12/06, G06Q 10/0836

(54) **SMART ITEM DROP-OFF**

(30) Priority: 13.03.2025 US 202519079237
(71) Applicant: Ricoh Company, Ltd., Tokyo 143-8555 (JP)
(72) Inventor: BLOHM, Nicole, Boulder, CO 80301-9270 (US)
(74) Representative: SSM Sandmair

(57) **Abstract**

The present disclosure relates to a smart item drop-off system. A location of a user device may be determined to be within a predetermined proximity of a storage system, and a selection of an item may be received from the user device. A storage unit, of the storage system, that will store the item may be identified. An identification of the storage unit and a command to cause access to the storage unit to be enabled may be transmitted to the storage system.

## Description

### TECHNICAL FIELD

The present disclosure relates to package locker systems.

### BACKGROUND

Automated package locker systems are becoming increasingly common in package delivery. Automated package locker systems can include a bank of package lockers that can be accessed by interacting with a locker kiosk. These systems can be used to automate both the processes of dropping-off and picking-up a package. For example, instead of delivering a package directly to the residence of a recipient, a last-mile courier can deliver a package to a package locker. The recipient can later authenticate at a locker kiosk using a barcode or other identifier and pick up the package from the package locker. As another example, a sender can interact with a locker kiosk to drop-off a package in a package locker, and a courier can later collect the package from the package locker for shipment to a recipient.

Using an automated package locker system for package drop-off, however, presents several challenges. For example, while package lockers may be of various sizes to accommodate differently sized packages, a user may find it difficult to choose a package locker that is appropriately sized for the user's package. Because the user is likely not aware of the dimensions of each locker-and may not even be aware of the dimensions of the package-the user could select a locker that is either too big or too small for the package. If a user selects a package locker that is too small for the package, then the user will need to select a different package locker, which could still be too small for the package. If the user selects a package locker that is larger than necessary, then the package would occupy a space that could be used for a larger package.

Thus, it would be desirable to have an automated package locker system.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### BRIEF DESCRIPTION OF THE DRAWINGS

In the drawings:
FIG. 1 illustrates a block diagram depicting an example of a network environment, in an embodiment.
FIGS. 2A-2F are diagrams depicting various examples of user interfaces rendered in a display of a user device by a storage application, in various embodiments.
FIG. 3 is a flow diagram that depicts an example of the operation of a portion of the components of a network environment, in an embodiment.
FIG. 4 is a block diagram that illustrates a computer system upon which an embodiment of the invention may be implemented.
FIG. 5 is a block diagram of a basic software system that may be employed for controlling the operation of a computing system.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

### GENERAL OVERVIEW

The present disclosure relates to a smart item drop-off system. A user may desire to drop-off one or more items at a storage system, such as a bank of package lockers, for shipment to a recipient. On a user device, the user may access an application executing on a user device. The application may receive input comprising shipment information, such as a recipient name, recipient address, shipment speed, desired courier, information about the one or more items, and potentially other information. The application may determine dimensions of the one or more items to be dropped-off. The application may provide the dimensions of the one or more items to a storage managements service. The storage managements service may access a database to identify an available storage unit of the storage system that is appropriately sized for the one or more items. The storage managements service may reserve the identified storage unit for the one or more items.

If there is no available storage unit that is appropriately sized for the one or more items, then the storage managements service may inform the user when an appropriately-sized storage unit will likely become available or instruct the application to notify the user when an appropriately-sized storage unit becomes available.

In some implementations, the application may present an augmented reality (AR) overlay to assist a user in dropping-off one or more items. For example, when the user arrives at the location of the storage system, the user can cause the application to access an image capture device. The image capture device may capture imagery of the user's environment, including the storage units of the storage system. In a display of the user device, the application may present an AR overlay on the captured imagery that highlights or otherwise emphasizes a storage unit that has been reserved for drop-off of the one or more items. The AR overlay may also present one or more visual guides that direct the user to the location of the reserved storage unit, information regarding shipment of the one or more items, and potentially other visual aids.

### SYSTEM OVERVIEW

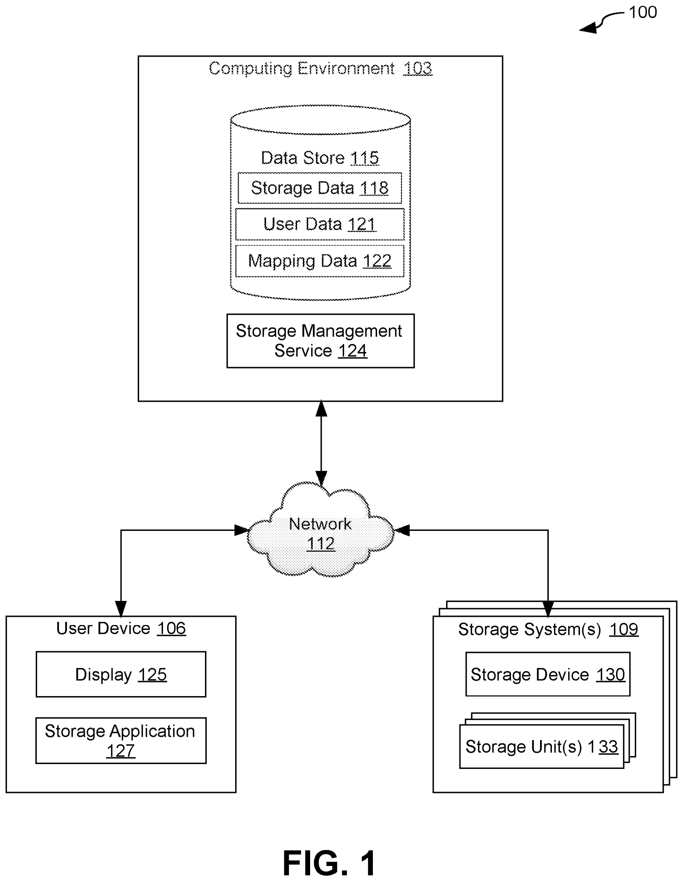

FIG. 1 illustrates a block diagram depicting an example of a network environment 100, in an embodiment. The network environment 100 may include a computing environment 103, one or more user devices 106, one or more storage systems 109, and potentially other components in communication via a network 112. The various components of the network environment 100 may interact using an application programming interface (API).

The network 112 includes the Internet, intranets, extranets, wide area networks (WANs), local area networks (LANs), wired networks, wireless networks, other suitable networks, or any combination of two or more such networks. The networks may include satellite networks, cable networks, Ethernet networks, and other types of networks.

The computing environment 103 may include a computing device, such as a server computer, that provides computing capabilities. Alternatively, the computing environment 103 may employ multiple computing devices that are arranged in one or more server banks or computer banks. In one example, the computing devices may be located in a single installation. In another example, the computing devices for the computing environment 103 may be distributed among multiple different geographical locations. In one case, the computing environment 103 may include multiple computing devices that together may form a hosted computing resource or a grid computing resource. In addition, the computing environment 103 may operate as an elastic computing resource where the allotted capacity of computing-related resources, such as processing resources, network resources, and storage resources, may vary over time. In other examples, the computing environment 103 may include or be operated as one or more virtualized computer instances that may be executed to perform the functionality that is described herein.

Various data may be stored in a data store 115 that may be accessible to the computing environment 103. The data store 115 may be representative of one or more data stores. The data stored in the data store 115 may be associated with the operation of the various applications or functional entities described below. Data stored in the data store 115 may include, for example, storage data 118 and user data 121.

Various applications or other functionality may be executed in the computing environment 103. Components executed in the computing environment 103 may include a storage management service 124 and other applications, services, processes, systems, engines, or functionality not discussed in detail herein.

The user device(s) 106 may represent one or more user devices 106 coupled to the network 112. The user device 106 may include a processor-based system, such as a computer system, that may include a desktop computer, a laptop computer, a personal digital assistant, a cellular telephone, a smartphone, a set-top box, a music player, a tablet computer system, a game console, an electronic book reader, or any other device with like capability. The user device 106 may also be equipped with networking capability or networking interfaces, including a localized networking or communication capability, such as a near-field communication (NFC) capability, radio-frequency identification (RFID) read or write capability, or other localized communication capability. The user device 106 may include one or more displays 125, such as liquid crystal displays (LCDs), gas plasma-based flat panel displays, organic light emitting diode (OLED) displays, electrophoretic ink ("E-ink") displays, projectors, or other types of display devices. In some instances, the display 125 can be a component of the user device 106 or can be connected to the user device 106 through a wired or wireless connection.

In addition, the user device 106 may be configured to execute various applications, such as the storage application 127. The storage application 127 and potentially other applications may access network content served up by the computing environment 103 or other servers, thereby rendering a user interface on the display 125. To this end, the storage application 127 may include a browser or a dedicated application, and the user interface may include a network page, an application screen, or other interface. Further, the storage application 127 may include device email applications, management applications, enterprise applications, social networking applications, word processors, spreadsheet applications, media viewing applications, or other applications.

The storage system(s) 109 may represent a system of a plurality of storage units 133 that are managed by a storage device 130. The storage device 133 may represent one or more computing devices coupled to the network 112. The storage device 130 may include a processor-based system, such as a computer system, that may include a desktop computer, a laptop computer, a personal digital assistant, a cellular telephone, a smartphone, a set-top box, a music player, a tablet computer system, a game console, an electronic book reader, or any other device with like capability. The storage device 130 may also be equipped with networking capability or networking interfaces, including a localized networking or communication capability, such as a near-field communication (NFC) capability, radio-frequency identification (RFID) read or write capability, or other localized communication capability. The storage device 130 may be in data communication with each of a plurality of associated storage units 133 via a wired or wireless connection.

### STORAGE MANAGEMENT SERVICE

The storage management service 124 may manage the drop-off of items to the storage system(s) 109. The storage management service 124 may reserve a storage unit 133 to store one or more items that a user intends to drop-off at a particular storage system 109. From the user device 106, the storage management service 124 may receive a reservation request, from the user device 106, that includes information regarding one or more items to be dropped-off, information about shipment of the one or more items, a desired drop-off time, and an identification of storage system 109 that will be used for drop-off. The information regarding the one or more items may also include dimensions of the one or more items. Before receiving the reservation request, the storage management service 124 may authenticate the user device based on credentials of the user account stored in the user data 121.

The storage management service 124 may access the storage data to identify a storage unit 133 of the selected storage system 109 that is suitable for storing the one or more items. The storage management service 124 may identify a storage unit 133 that is unoccupied- or will be unoccupied at the expected drop-off time-and that is appropriately sized to store the one or more items. The storage management service 124 may identify such a storage unit 133 using the storage data 118. From the storage units 133 of the selected storage system 133, the storage management service 124 may identify any storage units 133 that are currently available (e.g., not reserved) and have the capacity to store the one or more items. The storage management service 124 may determine whether a storage unit 133 has the capacity to store the one or more items by comparing the dimensions of the storage unit 133 with the dimensions of the one or more items.

If a drop-off request specifies multiple items, the storage management service 124 may first attempt to identify an available storage unit 133 in the selected storage system 133 that is appropriately sized to store all of the multiple items together. The storage management service 124 may make this determination by comparing the dimensions of available storage units 133 with the dimensions of the multiple items in one or more physical configurations (e.g., stacked vertically, stacked horizontally, etc.). If no such storage unit 133 is available, then the storage management service 124 may attempt to identify storage units 133 that are available and appropriately sized to store different portions of the multiple items. In some implementations, the storage management service 124 may, in its selection of available and appropriately sized storage units 133, attempt to maximize the physical proximity of the selected storage units 133 to each other.

If the selected storage system 109 has no available storage units 133 that are available and/or appropriately sized for the one or more items, the storage management service 124 may notify the user device 106 of that fact. In some implementations, the storage management service 124 may also suggest a different storage system 109 within a predefined proximity the user device's 106 location. The storage management service 124 may identify, from the storage data 118, each storage system 109 within that predefined proximity and determine whether each of those storage systems 109 has an available and appropriately sized storage unit 133. In some implementations, the storage management service 109 may indicate times at which an appropriately sized storage units 133 in the selected storage system 109 is scheduled to become available. If the user chooses to reserve an appropriately sized storage unit 133 when it becomes available, the storage management service 124 may receive, from the user device 106, a request to make that reservation, and the storage management service 124 may update the storage data 118 to assign the one or more items to that storage unit 133 beginning at the time the storage unit 133 becomes available.

If the storage management service 124 successfully identifies a storage unit 133 that is available and appropriately sized to store the one or more items, the storage management service 124 may create a reservation for the one or more items. The storage management service 124 may update the storage data 118 for the identified storage unit(s) 133, information about the one or more items and the user account that requested the reservation, information about when and how long that the reservation is scheduled to last, and potentially other information relevant to the reservation. In addition, while this and the following discussion may refer to a singular storage unit 133, the features and functionality discussed may likewise apply to cases where multiple storage units 133 are reserved for multiple items.

When a storage unit 133 has been reserved, the storage management service 124 may notify the storage device 130 of the selected storage system 109 and/or the user device 106. The notification may include information such as an identifier of the reserved storage unit 133, how long the storage unit 133 is scheduled to be reserved, and potentially other information about the reservation. When provided to the storage device 130, the notification may also be accompanied by instructions to enable access to the reserved storage unit 133. The storage management service 124 may receive a notification from the storage device 130 when the one or more items have been stored in the reserved storage unit 133.

The storage management service 124 may then update the storage data 118 for the reserved storage unit 133 to reflect that the storage unit 133 is now occupied. Likewise, the storage device 130 may notify the storage management service 124 when the one or more items have been removed from the reserved storage unit 133 (or when the reservation period has ended, if the one or more items were never stored in the reserved storage unit 133). The storage management service 124 may then update the storage data 118 for the reserved storage unit 133 accordingly. The storage management service 124 may update the storage data 118 to indicate that the reserved storage unit 133 is available and unoccupied and to remove (or mark as no longer current) the information associated with the reservation.

The storage data 118 may represent data associated with the storage system(s) 109. The storage data 118 may include, for each storage unit 133, an identifier of the storage unit 133, an identifier of the storage system 109, dimensions of the storage unit, a status of the storage unit (available, reserved, occupied, unoccupied, etc.), information regarding a reservation of the storage unit 118, if any, and potentially other data. The information regarding a reservation of a storage unit 133 may include, for example, information about one or more items that are or will be stored within the storage unit 133 and shipment of the item, an identifier of a user account associated with the reservation, a schedule of the storage unit 133 (i.e., when and how long the storage unit 133 is scheduled to be reserved). Data for the storage units 133 of each storage system 109 may be grouped together in, for instance, a database table.

The user data 121 may represent account data associated with user(s) of the user device(s) 106. The user data 121 may include credentials used to authenticate the user of the storage application 127 with the storage managements service 124. The credentials may include a username and password, a certificate, a biometric, or any other credential that may be used to authenticate the identity of the user device 106 as corresponding to a particular user account.

The mapping data 122 may represent three-dimensional mapping data for each of the storage systems 109. The mapping data 122 for an individual storage system 109 may comprise data representing a three-dimensional representation of the storage units 133 and the environment surrounding the storage units 133. The mapping data 122 may be used by the user device 106 to generate an augmented reality (AR) overlay on imagery of storage units 133 and their environment.

### STORAGE APPLICATION

The storage application 127 may be executed to initiate and facilitate the process to drop-off one or more items at a storage system 109. The storage application 127 may enable a user to initiate the drop-off of one or more items. In some examples, the storage application 127 may receive a selection of a particular storage system 109 where the item will be dropped-off. In other examples, the storage application 127 may automatically select a storage system 109 that is within a predetermined proximity of the user device 106, if any. The storage application 127 may then receive information about shipment of the item and the item itself. Such information includes, for example, the recipient name, recipient address, shipment speed, courier service, an identification of the one or more items, and potentially other information about the one or more items.

The storage application 127 may determine dimensions of the one or more items to be dropped-off. Dimensions may include measurements of an item's length, width, height, depth, or other measurements of the item's physical characteristics. In examples involving multiple items, the storage application 127 may determine the dimensions of each item individually.

To determine the dimensions of an item the storage application 127 may, for example, enable a user to provide input comprising the values of the item's dimensions. As another example, the storage application 127 may determine the item's dimensions based on imagery (e.g., the live preview feed generated by the image capture device, or a recorded photo or video) of the item. The storage application 127 may provide the determined dimensions of the one or more items to the storage management service 124 so that the one or more items may be assigned an appropriately sized storage unit 133.

The storage application 127 may access an image capture device of the user device 106 to enable the user to capture one or more images of the item. In some implementations, storage application 127 may present, in the display 125, one or more visual prompts or guides that direct the user on how to capture the one or more images of the item. These visual prompts or guides may direct the user to, for example, capture one or more images of the item at particular angle(s) relative to the image capture device, at particular distance(s) from the image capture device, or at particular orientation(s) relative to the image capture device.

The storage application 127 may identify the item within the image by detecting the physical boundaries of the item as within the image, such as the images edges or vertices, for example. In some implementation, the storage application 127 may present, in the display 125, a visual confirmation that the storage application 127 has successfully identified the item within the image. The storage application 127 may determine measurements of one or more measurable extents of the item that are represented in the image. The storage application 127 may calculate these measurements using any suitable photogrammetric processes.

When the storage application 127 has received the relevant information about the one or more items and the shipment, the storage application 127 may provide that information to the storage management service 124 together with a reservation request. In some examples, the storage application 124 may then receive from the storage management service 124 a notification of the reservation, including an identifier or other indication of which storage unit 133 has been reserved, times during which the one or more items may be dropped-off, and the location of the selected storage system 109.

The storage application 127 may detect when the user device 106 is within a predefined proximity of the selected storage system 109. The storage application 127 may use location services or other geolocation systems provided by an operating system of the user device 106. When the user device 106 is within the predefined proximity of the selected storage system 109, the storage application 127 may notify the storage management service 127 or the storage device 130.

In some implementations, the storage application 127 may allow the user of the user device 106 to request access to the reserved storage unit 133 to be enabled. For example, the storage application 127 may present a prompt in the display 125 that allows the user to input a selection to request access to the reserved storage unit 133. The storage application 127 may allow the user to request access to the reserved storage unit 133 upon receiving notification of the reservation, upon detecting that the user device 106 is within a predefined proximity of the selected storage system 109, or upon detecting that the user device 106 is within a predefined proximity of the reserved storage unit 133. When the user request to enable access to the reserved storage unit 133, the storage application 127 may transmit a request directly to the storage device 130 or to the storage management service 124. In the latter case, the storage management service 124 may send, to the storage device 130, instructions to enable access to the reserved storage unit 133. In other implementations, the storage device 130 may allow access to the reserved storage unit 133 to be enabled without input from the storage application 127 beyond a notification that the user device 109 is within a predefined proximity of the selected storage system 109.

In some implementations, the storage application 127 may present an augmented reality (AR) overlay in the display 125 to assist the user in locating a reserved storage unit 133. The storage application 127 may enable the user to access the AR overlay when the storage application 127 detects that the user device 106 is within a predefined proximity of the selected storage system 109. The storage application 127 may access an image capture device of the user device 106 to capture imagery of the user's surroundings (e.g., the live preview feed generated by the image capture device, or a recorded photo or video). Within the captured imagery, the storage application 127 may highlight or otherwise visually distinguish the reserved storage unit 133 and present visual cues that guide the user to the location of the reserved storage unit 133. The storage application 127 may obtain mapping data 122 for the selected storage system 109 from the storage managements service 127. The storage application 127 may use the mapping data 122, the captured imagery, and location data for the user device 106 to determine a position of the user device 106 within the environment of the selected storage system 109 and render the AR overlay based on the user's position. The storage application 127 may analyze the imagery captured by the image capture device to correlate features of the environment that are visually represented in the imagery with entities in the mapping data 122 for the selected storage system 109 (e.g., particular storage units 133).

In some implementations, the storage application 127 may present an AR overlay in the display to assist the user in identifying which items to store in which storage units 133. The storage application 127 may, using imagery from the image capture device (e.g., the live preview feed generated by the image capture device, or a recorded photo or video), highlight or otherwise visually emphasize one or more items that are assigned to a particular storage unit 133. In some implementations, the storage application 127 may present an AR overlay that highlights or otherwise visually emphasizes the one or more items assigned to the particular storage unit 133 as well as the particular storage unit 133 itself.

The storage application 127 may identify a particular item by, for example, detecting and reading a visual identifier on the item, such as a barcode. As another example, the storage application 127 may identify a particular item using the dimensions of the particular item that were previously obtained-within imagery depicting a plurality of items, the storage application 127 may attempt to determine the dimensions of each item and identify the particular item based on its dimensions. If two or more items having the same or substantially similar images are identified within the imagery, however, the storage application 127 may present an error message.

For example, if a user is in possession of a plurality of items, the AR overlay may highlight or otherwise visually emphasize one or more items that are assigned to a first storage unit 133. Once the one or more items have been stored in the first storage unit 133, the AR overlay may highlight or otherwise visually emphasize one or more other items that are assigned to a second storage unit 133.

As another example, if multiple items that have been assigned to multiple storage units 133 of the selected storage system 109 are identified in imagery from the image capture device, the storage application 127 may cause the AR overlay to highlight or otherwise visually emphasize every such item. If, however, any of the multiple items are assigned to different storage units 133 the storage application 127 may cause those items to be highlighted or otherwise visually emphasized in a manner that visually distinguishes items that are assigned to one storage unit 133 from items that are assigned to other storage units 133. The storage application 127 may potentially also cause each reserved storage unit 133 to be highlighted or otherwise visually emphasized in a manner that distinguishes it from the other reserved storage units 133. The storage application 127 may also potentially highlight a particular storage unit 133 in a manner that visually correlates it with item(s) that are assigned to that storage unit 133.

For example, suppose that a first item is assigned to a first storage unit 133 and a second item and third item are assigned to a second storage unit 133.In that case, the AR overlay may highlight the first item in a first color and highlight the second item and the third item in a second color. Potentially, the first storage unit 133 may also be highlighted in the first color and the second storage unit 133 in the second color. to Any method of visually distinguishing the items and/or storage units 133 from each other may be used, however.

### STORAGE SYSTEM

A storage system may include a storage device 130 and various storage units 133 located in a single geographical location. The storage units 133 may be arranged in a bank configuration or other suitable grouping. The storage system 109 and each of the storage units 133 may be uniquely identified by an identifier.

The storage device 130 may manage the storage units 133. The storage device 130 may cause access to a storage unit 133 to be enabled and/or disabled. For example, the storage device 130 may provide a command to a storage unit 133 that instructs the storage unit 133 to enable or disable access to the storage unit 133. The storage device 130 may cause access to a storage unit 133 to be enabled after the storage device 130 has been notified by the storage management service 124 that the storage unit 133 has been reserved. In some implementations, the storage device 130 may cause access to the storage unit 133 to be enabled in response to receiving the notification that the storage unit 133 has been reserved. In other implementations, the storage device 130 may cause access to the storage unit 133 to be enabled in response to detecting that the user device 106 is within a predefined proximity of the storage system 109. In still other implementations, the storage device 130 may cause access to the storage unit 133 to be enabled in response to receiving a request to enable access from the user device 106 (either directly from the user device 106 or via the storage management service 124). In some implementations, the storage device 130 may cause access to the storage unit to be disabled if access has remained enabled for a predetermined period of time.

The storage device 130 may determine that one or more items have been placed in a storage unit 133. For example, the storage device 130 may make this determination based on receiving a signal from a storage unit 133 when one or more items have been placed in the storage unit 133. In response, the storage device 130 may notify the storage management service 124 that one or more items have been placed in the storage unit 133. This notification may include, for instance, an identifier of the storage system 109 and an identifier of the storage unit 133.

The storage unit(s) 133 may represent a compartment capable of storing one or more items. Each storage unit 133 may, together with one or more other storage units 133, be associated with a storage device 130, together with which they may comprise a storage system 109. A storage unit 133 may also include a computing device that is in data communication with the storage device 130 via a wired or wireless connection.

A storage unit 133 may be enclosed or unenclosed. In some implementations, if enclosed, the storage unit 133 may include an access control device such as a door, hatch, or other device that is capable of enabling and/or disabling access to an interior of the storage device 133. When used herein, the phrases "enable access to a storage unit 133" and "disable access to a storage unit 133" and similar phrases may, in examples where the storage unit 133 is enclosed, mean causing the access control device of the storage unit 133 to enable and disable access to the interior of the storage device 133, respectively. The access control device may be operated to enable or disable access to the storage unit 133 by the computing device of that storage unit 133. The computing device of the storage unit 133 may operate the access control device upon receiving a command from the storage device 130. In some implementations, the computing device may operate the access control device automatically to disable access to the storage unit 133 when a predetermined period of time has passed since the access control unit was operated to enable access to the storage unit 133. The computing device may determine that access to the storage unit 133 has been disabled based on the fact that the computing device has itself operated to disable access or based on the computing device detecting when the access control device has been operated to disable access to the storage unit 133 (e.g., if the storage unit 133 includes a sensor to detect when a door of the storage unit 133 is closed). The computing device of the storage unit 133 may notify the storage device 130 whenever access to the storage unit 133 has been enabled or disabled.

When one or more items have been placed in an interior of a storage unit 133, the computing device of the storage unit 133 may provide a signal indicating as much to the storage device 130. The computing device may determine that an item has been placed in the storage unit 133 when, for example, the access control device of the storage unit 133 has been operated to enable and then soon thereafter to disable access to the storage unit 133 (e.g., the computing device operates the access control device to enable access and then the computing device or the user operates the access control device to disable access), or vice-versa. As another example, the computing device may determine that an item has been placed in the storage unit 133 when the access control device of the storage unit 133 has been operated to enable access to the storage unit 133 and then a predetermined amount of time has passed (e.g., if the access control device is unable to be automatically operated to disable access to the storage unit 133 and the user neglects to operate the access control device to disable access). In either of these situations, an item has presumably been placed in the storage unit 133. As another example, the computing device may determine that an item has been placed in the storage unit 133 using a scale, a digital camera, proximity sensor, other instrument capable of sensing the presence of one or more items in the interior of the storage unit 133. To illustrate, if a user places one or more items in the storage unit 133, the scale or other instrument may detect the presence of the one or more items and provide a signal to the computing device of the storage unit 133.

### EXAMPLE USER INTERFACES

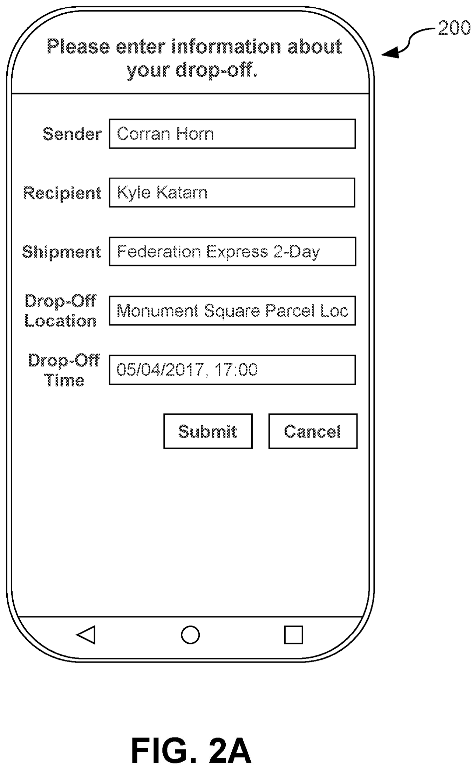

FIGS. 2A-2F are diagrams depicting various examples of user interfaces rendered in the display 125 of the user device 106 by the storage application 127, in various embodiments. The user interfaces depicted in FIGS. 2A-2F may be related to functionality described above with respect to FIG. 1. The user interfaces depicted in the examples of FIGS. 2A-2F are simply illustrative examples, however, and the functionality described may be implemented using any suitable user interface.

FIG. 2A is a diagram depicting an example of a user interface 200 for inputting information about a drop-off of one or more items at a storage system 109. The user interface 200 prompts the user for information about a sender of the one or more items (e.g., the user), information about a recipient of the one or more items, information about shipment of the one or more items, a drop-off location, and a drop-off time. The drop-off location represents a particular storage system 109 that the user has selected, at which the user intends to drop-off the one or more items. When the user interacts with an input field for selecting a drop-off location, the storage application 127 may present, in the user interface 200, a list of one or more storage systems 109 within a predefined proximity of a location of the user device 106.

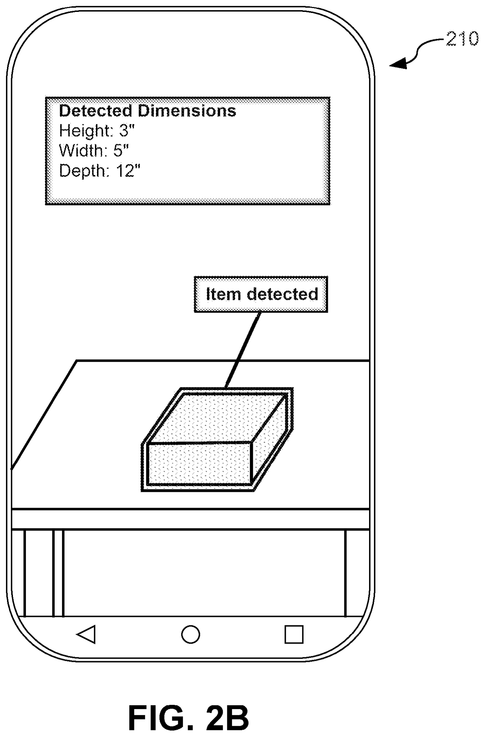

FIG. 2B is a diagram depicting an example of a user interface 210 for measuring dimensions of an item. The user interface 210 presents imagery of an item generated by an image capture device of the user device 106. The storage application 127 may access the image capture device and prompt the user to capture the imagery of the item (e.g., the live preview feed generated by the image capture device, or a recorded photo or video). The user interface 210 presents a visual confirmation that the item has been detected within the imagery. The storage application 127 identifies the measurable extents of the item, including the item's length, width, and height. The storage application 127 then determines the dimensions of the item by calculating the measurements of these extents using any suitable photogrammetric process.

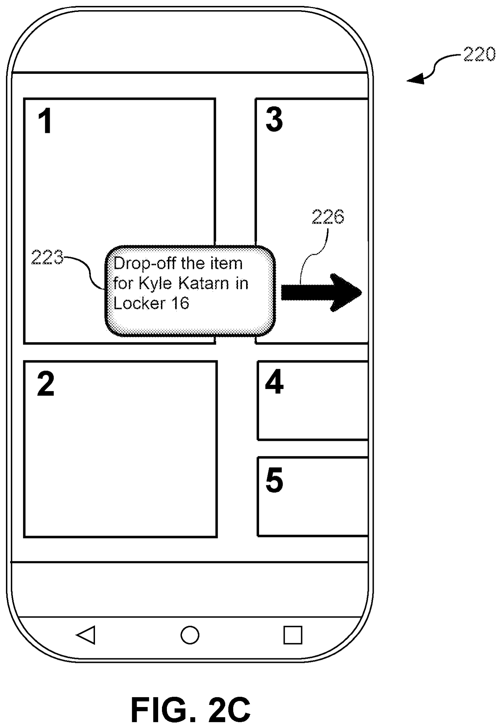

FIG. 2C is a diagram depicting an example of an augmented reality user interface 220 for guiding the user to a location of a reserved storage unit 133. The augmented reality user interface 220 presents imagery generated by an image capture device of the user device 106 (e.g., the live preview feed generated by the image capture device, or a recorded photo or video). The augmented reality user interface 220 also presents, overlaid on the imagery, visual elements that help the user to find the storage unit 133 that has been reserved for the user's item. One visual element is a message window 223 that identifies the reserved storage unit 133, as well as the item that is to be dropped-off in the reserved storage unit 133. Another visual element is a directional guide 226 that directs the user towards the reserved storage unit 133. The storage application 127 generates the directional guide 226 by correlating the imagery captured by the image capture device with mapping data 122 obtained from the storage management service 127. By doing so, the storage application 127 determines the user device's 106 current position relative to the reserved storage unit 133, which is used to generate the directional guide 226. For example, the storage application 127 could determine that the imagery shows several storage units 133 labeled "1", "2", "3", "4", and "5"; the storage application 127 may determine the current position of the user device 106 based on the apparent position and orientation of the several storage units 133 relative to the user device 106. The storage application 127 may then determine, using mapping data 122 obtained from the storage management service 124, the location of the reserved storage unit 133 relative to those storage units 133. In some implementations, however, the storage management service 124 may make this determination itself using location data for the user device 106 obtained from the storage application 127; the storage management service 124 may then provide the result of the determination to the storage application 127. The storage application 127 may then generate the directional guide 226 based on the location of the reserved storage unit 133 relative to the current position of the user device 106 or relative to the storage units 133 that are currently in the view of the camera or imagery.

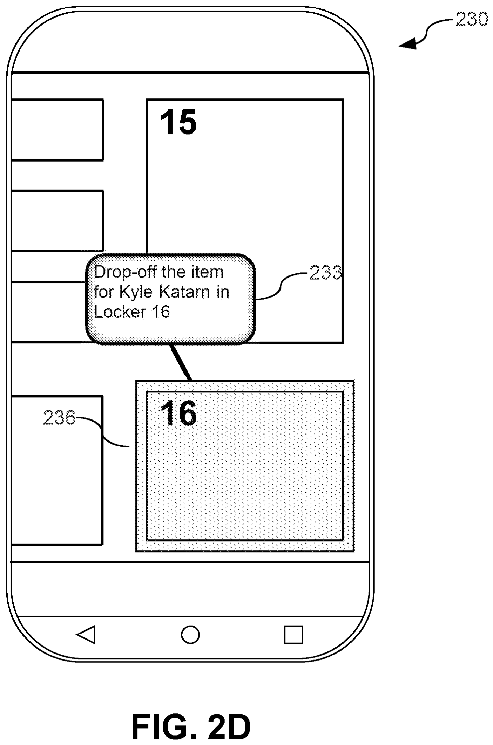

FIG. 2D is a diagram depicting an example of an augmented reality user interface 230 for visually identifying a reserved storage unit 133. The augmented reality user interface 230 presents imagery generated by an image capture device of the user device 106 (e.g., the live preview feed generated by the image capture device, or a recorded photo or video). The augmented reality user interface 230 also presents, overlaid on the imagery, visual elements that help the user to identify the reserved storage unit 133. These visual elements include a message window 233 that identifies the reserved storage unit 133 and the item to be dropped-off, as well as a visual highlight 236 overlaid on the visual representation of the reserved storage unit 133. The storage application 127 generates the visual elements by correlating the imagery captured by the image capture device with the mapping data 122. By doing so, the storage application 127 identifies the reserved storage unit 133 within the imagery and renders the visual highlight 236 in the display 125 over the portions of the imagery that correspond to the reserved storage unit 133.

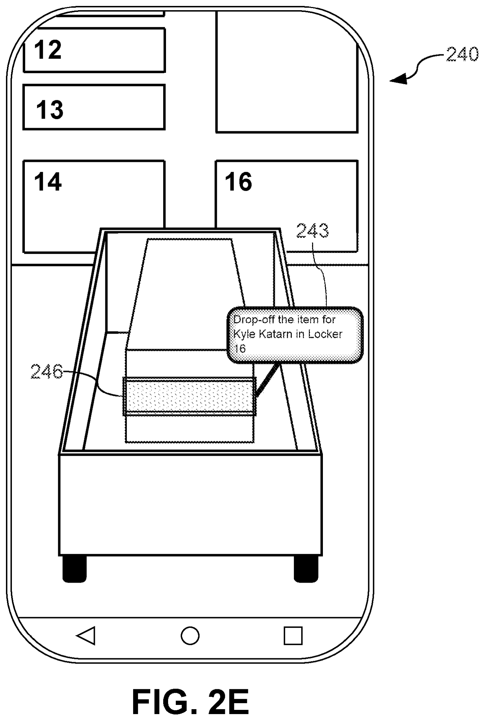

FIG. 2E is a diagram depicting an example of an augmented reality user interface 240 for visually identifying an item to be dropped-off at a reserved storage unit 133. The augmented reality user interface 240 presents imagery generated by an image capture device of the user device 106 (e.g., the live preview feed generated by the image capture device, or a recorded photo or video). The augmented reality user interface 240 also presents, overlaid on the imagery, visual elements that help the user to identify the particular item to be dropped-off in a reserved storage unit 133. The visual elements include a message window 243 that identifies the reserved storage unit 133 and the item, as well as a visual highlight 246 overlaid on the item itself. The storage unit 127 generates the visual elements by identifying the item within the imagery using a barcode on a surface of the item. In other examples, however, the storage management service 127 may instead identify the item by detecting an object within the imagery having dimensions that match (or are within a predetermined margin of error of) the previously-obtained dimensions of the item.

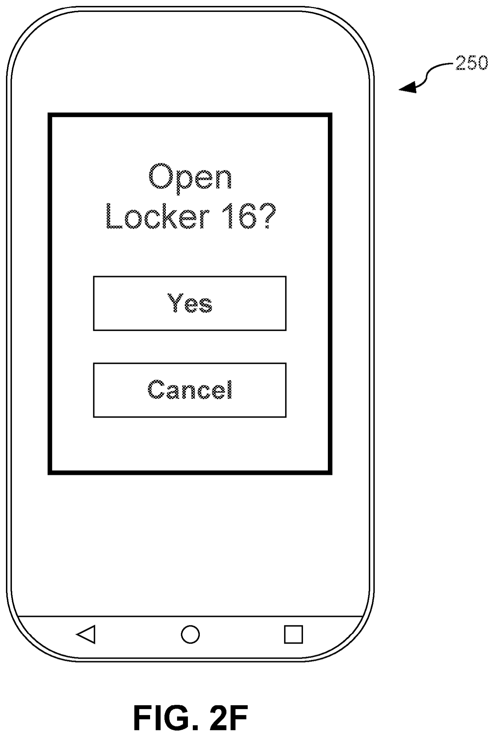

FIG. 2F is a diagram depicting an example of a user interface 250 for causing access to a storage unit 133 to be enabled. The user interface presents a dialog box that allows a user to select to enable access to the reserved storage unit 133 (or to cancel). The storage application 127 can present this user interface 250 upon receiving notification of the reservation from the storage management service 127, upon detecting that the user device 106 is within a predefined proximity of the selected storage system 109, or upon detecting that the user device 106 is within a predefined proximity of the reserved storage unit 133. The storage application 127 may determine that the user device 106 is within a predefined proximity of the selected storage system 109 using, for example, location services provided by an operating system of the user device 106. The storage application 127 may determine that the user device 106 is within a predefined proximity of the reserved storage unit 133 based on, for example, the current position of the user device 106 relative to the reserved storage unit 133 as determined using imagery captured by an image capture device of the user device 106 and mapping data 122.

### EXAMPLE PROCESS FOR ITEM DROP-OFF

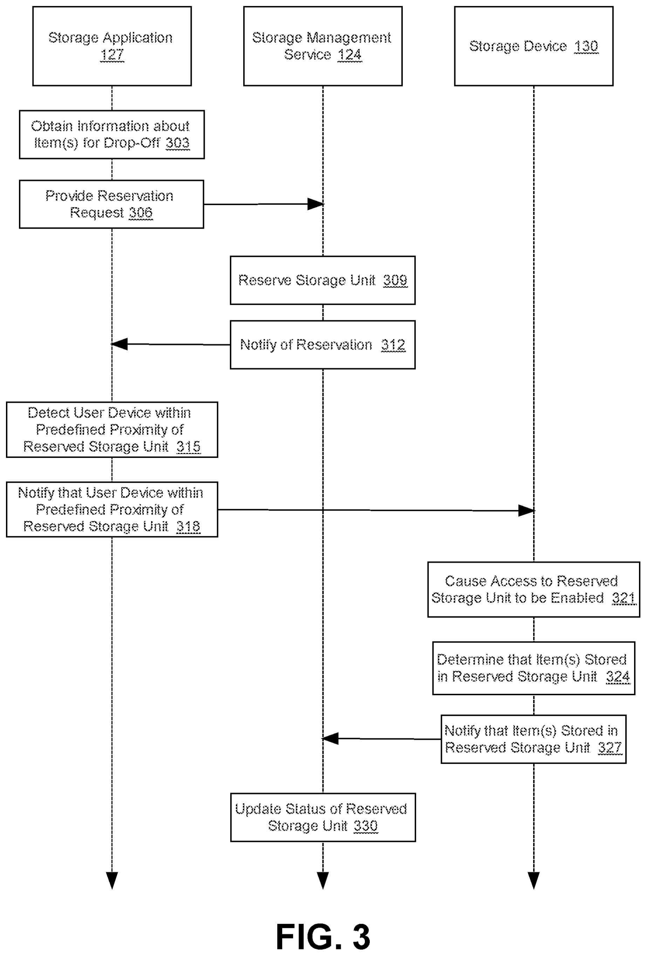

FIG. 3 is a flow diagram that depicts an example of the operation of a portion of the components of the network environment 100, in an embodiment. The flow diagram of FIG. 3 provides merely an example of the many different types of functional arrangements that may be employed to implement the operation of the depicted portion of depicted components of the network environment 100.

At step 303, the storage application 127 obtains information about one or more items to be dropped-off at a storage unit 133 of a storage system 109, shipment of the one or more items (if applicable), and the storage system 109 where the one or more items will be dropped-off. This information may include, for example, a name and address of a recipient, a courier service, a shipment speed, an identification of the one or more items, and dimensions of the one or more items. At least a portion of the information may be obtained from input in a user interface rendered in the display 125 of the user device 106. The dimensions of the one or more items may be determined by the storage application 127. For example, the storage application 127 may accept user input comprising the one or more items' dimensions or determine the dimensions using imagery of the one or more items. In the latter example, the storage application 127 may obtain the imagery of the one or more items using an image capture device of the user device 106. The storage application 127 may detect the one or more items within the imagery and calculate measurements for measurable extents of the one or more items using any suitable photogrammetric process. The storage application 127 further obtains a selection of an intended drop-off location and drop-off time. The drop-off location corresponds to a selected storage system 109.

At step 306, the storage application 127 provides a reservation request to the storage management service 124. The reservation request may include the information obtained at step 303.

At step 309, the storage management service 124 reserves a storage unit 133 for drop-off of the one or more items. The storage unit 133 may be a part of the selected storage system 109 specified in the reservation request of step 306. The storage management service 109 may identify the storage unit 133 using the storage data 118. The storage unit 133 may be one that is available at the intended drop-off time specified in the reservation request and appropriately sized to store the one or more items. The storage management service 124 may then update the storage data 118 to reflect that the storage unit 133 is reserved for storing the one or more items for a specified duration.

At step 312, the storage management service 124 notifies the user device 106 of the reservation. The notification may include information such as an identifier of the reserved storage unit 133, an identifier of the selected storage system 109, a duration of the reservation, and potentially other information about the reservation.

At step 315, the storage application 127 detects that the user device 106 is within a predefined proximity of the selected storage system 109. The storage application 127 may use location services or other geolocation systems provided by an operating system of the user device 106.

At step 318, the storage application 127 notifies the storage device 130 that the user device 106 is within the predefined proximity of the selected storage system 109. The storage application 127 may provide this notification directly to the storage device 130 or provide the notification to the storage management service 124, which may itself provide the notification to the storage device 130.

At step 321, the storage device 130 causes access to the reserved storage unit 133 to be enabled. In some implementations, the storage device 130 may cause access to the reserved storage unit 133 to be enabled in response receiving the notification the storage unit 133 has been reserved from the storage management service 124. In other implementations, the storage device 130 may cause access to the reserved storage unit 133 to be enabled only once the user device 106 is within a predefined proximity of the reserved storage unit 133 or once the storage device receives a request to enable access that originates from the user device 106. The storage device 130 causes access to the reserved storage unit 133 to be enabled by operating an access control unit connected to the reserved storage unit 133.

At step 324, the storage device 130 determines that the one or more items have been stored in the reserved storage unit 133. When the user has placed the one or more items into an interior of the reserved storage unit 133, the storage device 130 may receive a signal indicating as much from the reserved storage unit 133. This signal may be generated by a computing device linked to the reserved storage unit 133 when, for example, a scale in the reserved storage unit 133 detects that the one or more items have been placed on the scale; when a digital, camera, proximity sensor, or other instrument in data communication with the linked computing device detects the presence of the one or more items in the interior of the reserved storage unit 133; when the linked computing device detects that access to the reserved storage unit 133 has been disabled; or when a predefined period of time has elapsed after the access control unit is operated to enable access to the reserved storage unit 133 (such as if the user neglects operate the access control device to disable access to the reserved storage unit 133) .

At step 327, the storage device 130 notifies the storage management service 124 that the one or more items have been stored in the reserved storage unit 133. This notification may include, for instance, an identifier of the reserved storage unit 133, an identifier of the selected storage system 109, and an indication that one or more items have been placed in the reserved storage unit 133.

At step 330, the storage management service 124 updates a status of the reserved storage unit 133. The storage management service 124 may modify the storage data 118 to reflect that the reserved storage unit 133 is now occupied and that the reservation has begun.

### HARDWARE OVERVIEW [boilerplate]

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

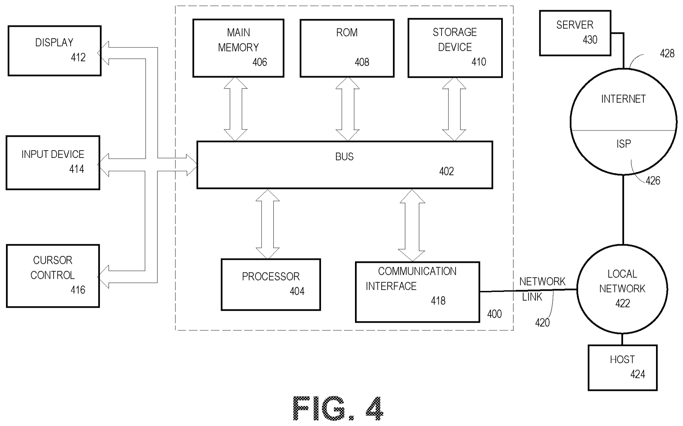

For example, FIG. 4 is a block diagram that illustrates a computer system 400 upon which an embodiment of the invention may be implemented. Computer system 400 includes a bus 402 or other communication mechanism for communicating information, and a hardware processor 404 coupled with bus 402 for processing information. Hardware processor 404 may be, for example, a general purpose microprocessor.

Computer system 400 also includes a main memory 406, such as a random access memory (RAM) or other dynamic storage device, coupled to bus 402 for storing information and instructions to be executed by processor 404. Main memory 406 also may be used for storing temporary variables or other intermediate information during execution of instructions to be executed by processor 404. Such instructions, when stored in non-transitory storage media accessible to processor 404, render computer system 400 into a special-purpose machine that is customized to perform the operations specified in the instructions.

Computer system 400 further includes a read only memory (ROM) 408 or other static storage device coupled to bus 402 for storing static information and instructions for processor 404. A storage device 410, such as a magnetic disk, optical disk, or solid-state drive is provided and coupled to bus 402 for storing information and instructions.

Computer system 400 may be coupled via bus 402 to a display 412, such as a cathode ray tube (CRT), for displaying information to a computer user. An input device 414, including alphanumeric and other keys, is coupled to bus 402 for communicating information and command selections to processor 404. Another type of user input device is cursor control 416, such as a mouse, a trackball, or cursor direction keys for communicating direction information and command selections to processor 404 and for controlling cursor movement on display 412. This input device typically has two degrees of freedom in two axes, a first axis (e.g., x) and a second axis (e.g., y), that allows the device to specify positions in a plane.

Computer system 400 may implement the techniques described herein using customized hard-wired logic, one or more ASICs or FPGAs, firmware and/or program logic which in combination with the computer system causes or programs computer system 400 to be a special-purpose machine. According to one embodiment, the techniques herein are performed by computer system 400 in response to processor 404 executing one or more sequences of one or more instructions contained in main memory 406. Such instructions may be read into main memory 406 from another storage medium, such as storage device 410. Execution of the sequences of instructions contained in main memory 406 causes processor 404 to perform the process steps described herein. In alternative embodiments, hard-wired circuitry may be used in place of or in combination with software instructions.

The term "storage media" as used herein refers to any non-transitory media that store data and/or instructions that cause a machine to operate in a specific fashion. Such storage media may comprise non-volatile media and/or volatile media. Non-volatile media includes, for example, optical disks, magnetic disks, or solid-state drives, such as storage device 410. Volatile media includes dynamic memory, such as main memory 406. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 402. Transmission media can also take the form of acoustic or light waves, such as those generated during radio-wave and infra-red data communications.

Various forms of media may be involved in carrying one or more sequences of one or more instructions to processor 404 for execution. For example, the instructions may initially be carried on a magnetic disk or solid-state drive of a remote computer. The remote computer can load the instructions into its dynamic memory and send the instructions over a telephone line using a modem. A modem local to computer system 400 can receive the data on the telephone line and use an infra-red transmitter to convert the data to an infra-red signal. An infra-red detector can receive the data carried in the infra-red signal and appropriate circuitry can place the data on bus 402. Bus 402 carries the data to main memory 406, from which processor 404 retrieves and executes the instructions. The instructions received by main memory 406 may optionally be stored on storage device 410 either before or after execution by processor 404.

Computer system 400 also includes a communication interface 418 coupled to bus 402. Communication interface 418 provides a two-way data communication coupling to a network link 420 that is connected to a local network 422. For example, communication interface 418 may be an integrated services digital network (ISDN) card, cable modem, satellite modem, or a modem to provide a data communication connection to a corresponding type of telephone line. As another example, communication interface 418 may be a local area network (LAN) card to provide a data communication connection to a compatible LAN. Wireless links may also be implemented. In any such implementation, communication interface 418 sends and receives electrical, electromagnetic or optical signals that carry digital data streams representing various types of information.

Network link 420 typically provides data communication through one or more networks to other data devices. For example, network link 420 may provide a connection through local network 422 to a host computer 424 or to data equipment operated by an Internet Service Provider (ISP) 426. ISP 426 in turn provides data communication services through the world wide packet data communication network now commonly referred to as the "Internet" 428. Local network 422 and Internet 428 both use electrical, electromagnetic or optical signals that carry digital data streams. The signals through the various networks and the signals on network link 420 and through communication interface 418, which carry the digital data to and from computer system 400, are example forms of transmission media.

Computer system 400 can send messages and receive data, including program code, through the network(s), network link 420 and communication interface 418. In the Internet example, a server 430 might transmit a requested code for an application program through Internet 428, ISP 426, local network 422 and communication interface 418.

The received code may be executed by processor 404 as it is received, and/or stored in storage device 410, or other non-volatile storage for later execution.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is the literal and equivalent scope of the set of claims that issue from this application, in the specific form in which such claims issue, including any subsequent correction.

### SOFTWARE OVERVIEW [boilerplate]

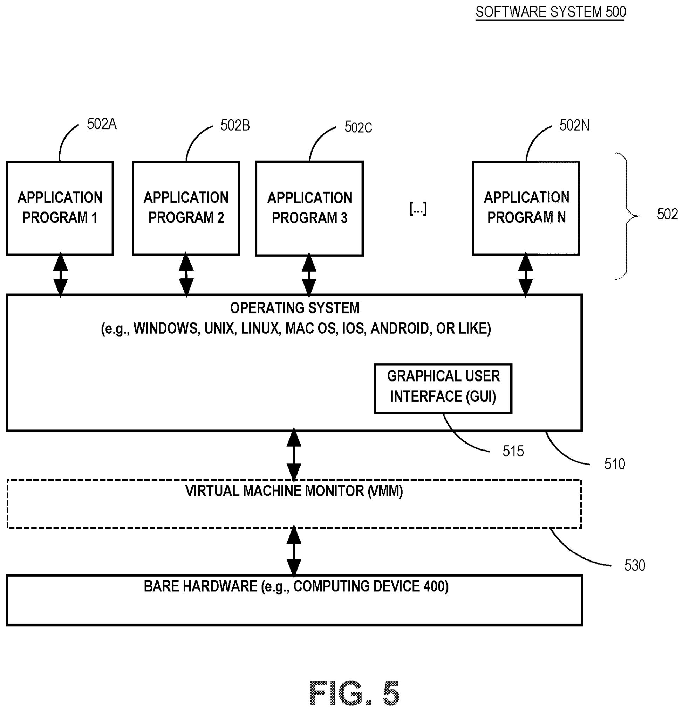

FIG. 5 is a block diagram of a basic software system 500 that may be employed for controlling the operation of computing system 400. Software system 500 and its components, including their connections, relationships, and functions, is meant to be exemplary only, and not meant to limit implementations of the example embodiment(s). Other software systems suitable for implementing the example embodiment(s) may have different components, including components with different connections, relationships, and functions.

Software system 500 is provided for directing the operation of computing system 400. Software system 500, which may be stored in system memory (RAM) 406 and on fixed storage (e.g., hard disk or flash memory) 410, includes a kernel or operating system (OS) 510.

The OS 510 manages low-level aspects of computer operation, including managing execution of processes, memory allocation, file input and output (I/O), and device I/O. One or more application programs, represented as 502A, 502B, 502C ... 502N, may be "loaded" (e.g., transferred from fixed storage 410 into memory 406) for execution by the system 500. The applications or other software intended for use on computer system 400 may also be stored as a set of downloadable computer-executable instructions, for example, for downloading and installation from an Internet location (e.g., a Web server, an app store, or other online service).

Software system 500 includes a graphical user interface (GUI) 515, for receiving user commands and data in a graphical (e.g., "point-and-click" or "touch gesture") fashion. These inputs, in turn, may be acted upon by the system 500 in accordance with instructions from operating system 510 and/or application(s) 502. The GUI 515 also serves to display the results of operation from the OS 510 and application(s) 502, whereupon the user may supply additional inputs or terminate the session (e.g., log off).

OS 510 can execute directly on the bare hardware 520 (e.g., processor(s) 404) of computer system 400. Alternatively, a hypervisor or virtual machine monitor (VMM) 530 may be interposed between the bare hardware 520 and the OS 510. In this configuration, VMM 530 acts as a software "cushion" or virtualization layer between the OS 510 and the bare hardware 520 of the computer system 400.

VMM 530 instantiates and runs one or more virtual machine instances ("guest machines"). Each guest machine comprises a "guest" operating system, such as OS 510, and one or more applications, such as application(s) 502, designed to execute on the guest operating system. The VMM 530 presents the guest operating systems with a virtual operating platform and manages the execution of the guest operating systems.

In some instances, the VMM 530 may allow a guest operating system to run as if it is running on the bare hardware 520 of computer system 500 directly. In these instances, the same version of the guest operating system configured to execute on the bare hardware 520 directly may also execute on VMM 530 without modification or reconfiguration. In other words, VMM 530 may provide full hardware and CPU virtualization to a guest operating system in some instances.

In other instances, a guest operating system may be specially designed or configured to execute on VMM 530 for efficiency. In these instances, the guest operating system is "aware" that it executes on a virtual machine monitor. In other words, VMM 530 may provide para-virtualization to a guest operating system in some instances.

A computer system process comprises an allotment of hardware processor time, and an allotment of memory (physical and/or virtual), the allotment of memory being for storing instructions executed by the hardware processor, for storing data generated by the hardware processor executing the instructions, and/or for storing the hardware processor state (e.g. content of registers) between allotments of the hardware processor time when the computer system process is not running. Computer system processes run under the control of an operating system, and may run under the control of other programs being executed on the computer system.

## Claims

1. A method comprising:
determining that a location of a user device is within a predetermined proximity of a storage system;
receiving a selection of an item from the user device;
identifying a storage unit, of the storage system, that will store the item; and
transmitting, to the storage system, an identification of the storage unit, and a command to cause access to the storage unit to be enabled,
wherein the method is performed by one or more computing devices.

2. The method of claim 1, further comprising:
receiving, from the storage device, an indication that the storage unit stores the item; and
updating a data associated with the storage system to indicate a reservation of the storage unit for a predetermined period of time.

3. The method of claim 1, wherein the one or more computing devices communicate with the storage device via an application programming interface (API).

4. The method of claim 1, further comprising authenticating the user device based at least in part on one or more credentials associated with the user account.

5. The method of claim 1, wherein the storage device provides the identification of the storage unit to the user device.

6. The method of claim 1, wherein the user device:
accesses an image capture device of the user device;
causes the image capture device to capture visual input comprising one or more portions of a physical environment of the user device;
renders, in a display of the user device, an augmented reality (AR) overlay over a presentation of visual input of the image capture device, wherein the AR overlay provides a visual indication of the storage unit within the physical environment and visually distinguishes the storage unit within the physical environment.

7. The method of claim 1, wherein the storage device causes the storage unit to enable access to the storage unit in response to:
the user device being located proximate to the storage unit, or
receiving a request to enable access to the storage unit.

8. The method of claim 1, wherein the user device:
accesses an image capture device of the user device;
causes the image capture device to capture visual input comprising the item;
determine dimensions of the item based at least in part on the visual input comprising them item; and
transmits the dimensions of the item to the one or more computing devices, wherein the storage unit is identified based at least in part on the dimension of the item.

9. One or more non-transitory storage media storing instructions which, when executed by one or more computing devices, cause:
determining that a location of a user device is within a predetermined proximity of a storage system;
receiving a selection of an item from the user device;
identifying a storage unit, of the storage system, that will store the item; and
transmitting, to the storage system, an identification of the storage unit, and a command to cause access to the storage unit to be enabled.

10. The one or more non-transitory storage media of claim 9, wherein the instructions, when executed by the one or more computing devices, further cause:
receiving, from the storage device, an indication that the storage unit stores the item; and
updating a data associated with the storage system to indicate a reservation of the storage unit for a predetermined period of time.

11. The one or more non-transitory storage media of claim 9, wherein the instructions, when executed by the one or more computing devices, further cause authenticating the user device based at least in part on one or more credentials associated with the user account.

12. The one or more non-transitory storage media of claim 9, wherein the storage device provides the identification of the storage unit to the user device.

13. The one or more non-transitory storage media of claim 9, wherein the user device:
accesses an image capture device of the user device;
causes the image capture device to capture visual input comprising one or more portions of a physical environment of the user device;
renders, in a display of the user device, an augmented reality (AR) overlay over a presentation of visual input of the image capture device, wherein the AR overlay provides a visual indication of the storage unit within the physical environment and visually distinguishes the storage unit within the physical environment.

14. The one or more non-transitory storage media of claim 9, wherein the user device:
accesses an image capture device of the user device;
causes the image capture device to capture visual input comprising the item;
determine dimensions of the item based at least in part on the visual input comprising them item; and
transmits the dimensions of the item to the one or more computing devices, wherein the storage unit is identified based at least in part on the dimension of the item.

15. An apparatus, comprising:
one or more processors; and
one or more memories storing instructions that, when executed by the one or more processor, cause:
determining that a location of a user device is within a predetermined proximity of a storage system;
receiving a selection of an item from the user device;
identifying a storage unit, of the storage system, that will store the item; and
transmitting, to the storage system, an identification of the storage unit, and a command to cause access to the storage unit to be enabled.
